# EUROPÄISCHE PATENTANMELDUNG

(11) **EP 1 666 147 A1**
(43) Veröffentlichungstag der Anmeldung: **07.06.2006**
(21) Anmeldenummer: 05024247.8
(22) Anmeldetag: 08.11.2005
(51) Int. Cl.: B01L 3/00, F16K 3/08, F16K 3/32

(54) **Laborarmatur mit einem Absperrmechanismus**

(30) Priorität: 18.11.2004 DE 102004055804
(71) Anmelder: H. Lüdi + Co. AG, 8105 Regensdorf (CH)
(72) Erfinder: Lüdi, Hansjürg, 8953 Dietikon (CH)
(74) Vertreter: Kesselhut, Wolf

(57) **Zusammenfassung**

Eine Laborarmatur (1) mit einem einen Eingang (2) und einen Abgang (3) für ein Medium enthaltenden Gehäuse (4), sowie mit einem Absperrmechanismus, welcher eine erste gehäuseseitige Dichtscheibe (5) sowie eine, durch einen im Gehäuse drehbar aufgenommenen Mitnehmer (7) antreibbare zweite Dichtscheibe (6) umfasst, zeichnet sich dadurch aus, dass der Eingang (2), die erste und zweite Dichtscheibe (5,6) sowie der Abgang (3) im Wesentlichen rotationssymmetrisch zu einer sich durch das Gehäuse (4) hindurch erstreckenden gemeinsamen Längsachse (15) angeordnet sind, und dass auf der Außenseite des Gehäuses ein gegenüber dem Gehäuse (4) in Umfangsrichtung drehbares, insbesondere hülsenförmiges Antriebselement (13) angeordnet ist, welches mit dem Mitnehmer (7) über ein Verbindungselement (8) antriebsmäßig verbunden ist, welches sich durch eine radial in der Außenseite des Gehäuses (4) gebildete Öffnung (16) in das Innere des Gehäuses (4) hinein erstreckt.

## Beschreibung

Die Erfindung betrifft eine Laborarmatur mit einem Absperrmechanismus gemäß dem Oberbegriff von Anspruch 1.

Aus dem Stand der Technik sind Laborarmaturen bekannt, bei denen der Einlass und der Auslass für das jeweilige Medium, z.B. Wasser, Sauerstoff, Luft etc., im Winkel zueinander angeordnet sind, und der Absperrmechanismus zwei relativ zueinander verdrehbare Keramikscheiben mit Durchtrittsöffnungen umfasst, die sich zwischen dem Einlass und dem Auslass befinden.

Bei dieser Ausführungsform besteht das Problem, dass beim Anschluss- und Ablösevorgang von Anschlussadaptern oder Aggregaten an die Armatur infolge der aufgebrachten Drehmomente Kräfte auf die Armatur einwirken, die zu Beschädigungen führen können.

Zudem erfolgt der Antrieb zum Verdrehen der Dichtungsscheiben bei den bekannten Laborarmaturen in der Regel über eine Welle und einen Antriebshahn durch die Gehäusewand hindurch von der Frontseite oder Oberseite aus, was eine Eck-Umlenkung des Mediums um beispielsweise 90 ° innerhalb der Armatur voraussetzt. Hierdurch ist es bei den beschriebenen Armaturen konstruktionsbedingt nicht möglich, beim Einsatz von zwei in dichtungstechnischer Hinsicht besonders vorteilhaften gegeneinander verdrehbaren Keramik-Dichtungsscheiben, den Einlass oder Eingang der Armatur und den Auslass oder Ausgang der Armatur im Wesentlichen entlang einer Achse anzuordnen.

Demgemäß ist es eine Aufgabe der vorliegenden Erfindung, eine Laborarmatur mit einem reduzierten Strömungswiderstand für das Medium sowie einer verbesserten Ergonomie zu schaffen.

Diese Aufgabe wird erfindungsgemäß durch die Merkmale von Anspruch 1 gelöst. ,

Die Erfindung besitzt insbesondere den Vorteil, dass sie auch beim Einsatz eines zusätzlichen Ventils oder einer zusätzlichen Absperreinrichtung innerhalb des Gehäuses, die als redundante Sicherung gegen einen unbeabsichtigten Austritt des Mediums beim versehentlichen Öffnen der Absperreinrichtung dient, eine sehr kompakte Bauform aufweist.

Zudem lassen sich gewünschten Falls an den frontseitigen Anschluss weitere Zusatzadapter für das Medium, sei es nun ein Gas, oder eine Flüssigkeit, anschließen, z.B. Mischbatterien, Verteiler oder Drosseleinrichtungen etc.

Die Erfindung wird nachfolgend mit Bezug auf die Zeichnungen anhand von bevorzugten Ausführungsformen beschrieben. In den Zeichnungen zeigen:
- Fig. 1: Eine schematische Querschnittsansicht durch die erfindungsgemäße Armatur,
- Fig. 2: eine schematische Aufsicht auf die erfindungsgemäße Armatur, und
- Fig. 3: eine schematische Frontansicht der erfindungsgemäßen Armatur.

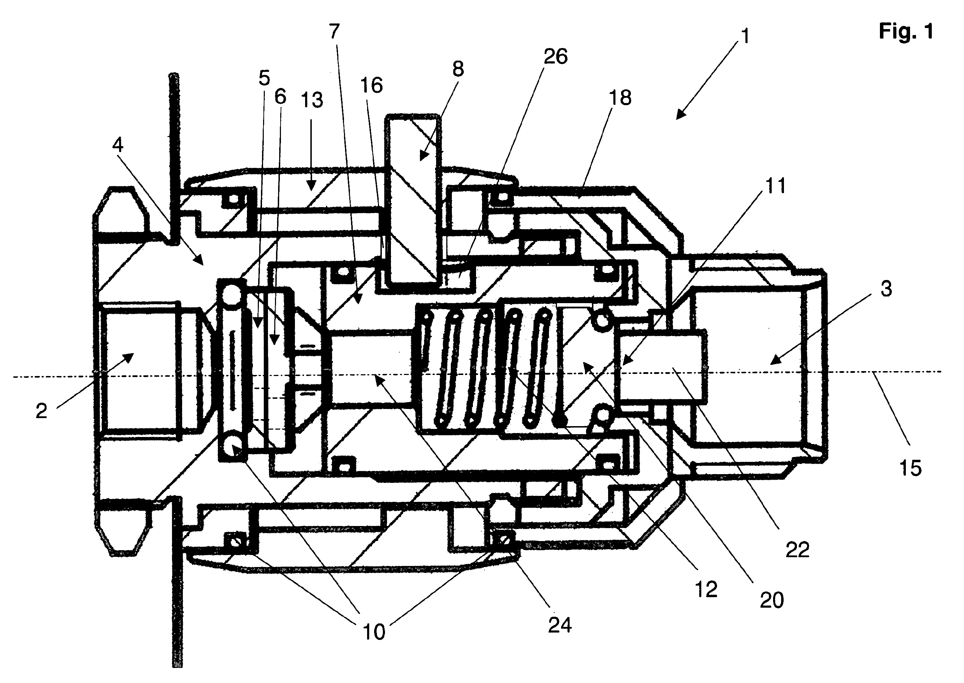

Wie in den Figuren 1 bis 3 gezeigt ist, umfasst eine Laborarmatur 1 einen Eingang 2 und einen Abgang 3 für ein Medium, z.B. Gas oder eine Flüssigkeit. Die Armatur 1 weist hierbei ein Gehäuse 4 mit einem Absperrmechanismus auf, welcher eine erste gehäuseseitige Dichtscheibe 5 mit einer nicht näher bezeichneten ersten Durchtrittsöffnung aufweist, und der eine gegenüber der ersten Dichtscheibe 5 angeordnete zweite Dichtscheibe 6 mit einer zweiten Durchtrittsöffnung umfasst, die über einen vorzugsweise hülsenförmig ausgestalteten Mitnehmer 7 zur Veränderung des Durchflusses rotierbar ist.

Der Mitnehmer 7 ist im Gehäuse drehbar aufgenommen und weist eine Durchtrittsöffnung 24 auf, durch die hindurch das Medium von der zweiten Dichtscheibe 6 aus zum Abgang 3 strömen kann.

Gemäß der Erfindung sind der Eingang 2, die erste und zweite Dichtscheibe 5, 6 der Abgang 3 und vorzugsweise auch der Mitnehmer 7 im Wesentlichen rotationssymmetrisch zu einer sich durch das Gehäuse 4 hindurch erstreckenden gemeinsamen Längsachse 15 angeordnet. Auf der Außenseite des Gehäuses 4 ist weiterhin ein gegenüber dem Gehäuse 4 in Umfangsrichtung drehbares Antriebselement 13 in Form eines hülsenförmigen Drehgriffs angeordnet, welches mit dem Mitnehmer 7 über ein Verbindungselement 8 in Form eines Stiftes oder Bolzens 8 antriebsmäßig verbunden ist. Das Verbindungselement 8 ist hierbei bevorzugt fest mit dem Antriebselement 13 verbunden und erstreckt sich durch eine radial in der Außenseite des Gehäuses 4 gebildete Öffnung 16 in Form eines Längsschlitzes in das Innere des Gehäuses 4 hinein, wo es in eine in der Außenseite des Mitnehmers 7 gebildete, vorzugsweise längliche Ausnehmung 26 zur Drehung desselben eingreift.

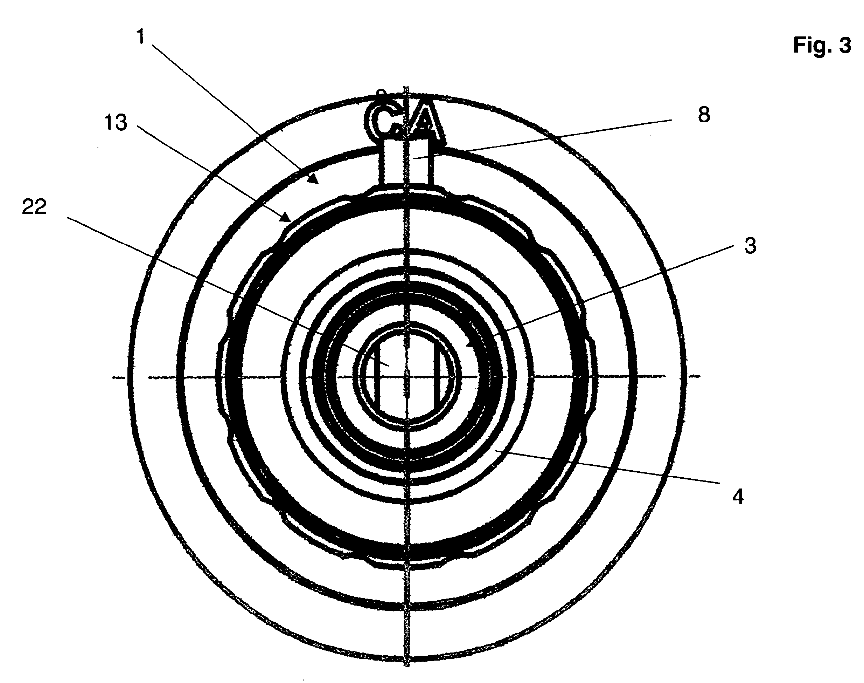

Wie der Darstellung von Fig. 1 und 3 im Detail entnommen werden kann, erstreckt sich der Stift 8 bevorzugt aus der Außenseite des hülsenförmigen Antriebselements 13 heraus, so dass sich anhand der Position des Stifts 8 z.B. anhand einer äußeren Markierung oder eines Wortzuges, der z.B. auf eine Abdeckkappe 18 aufgebracht sein kann, der Schließzustand der erfindungsgemäßen Armatur ablesen lässt.

Das Gehäuse 4 weist im Bereich des Antriebselements 13 vorzugsweise eine im Wesentlichen zylindermantelförmige Außenfläche auf, in die die Öffnung 16 als umfänglicher Längsschlitz eingebracht ist, in welchem der Stift 8 geführt wird.

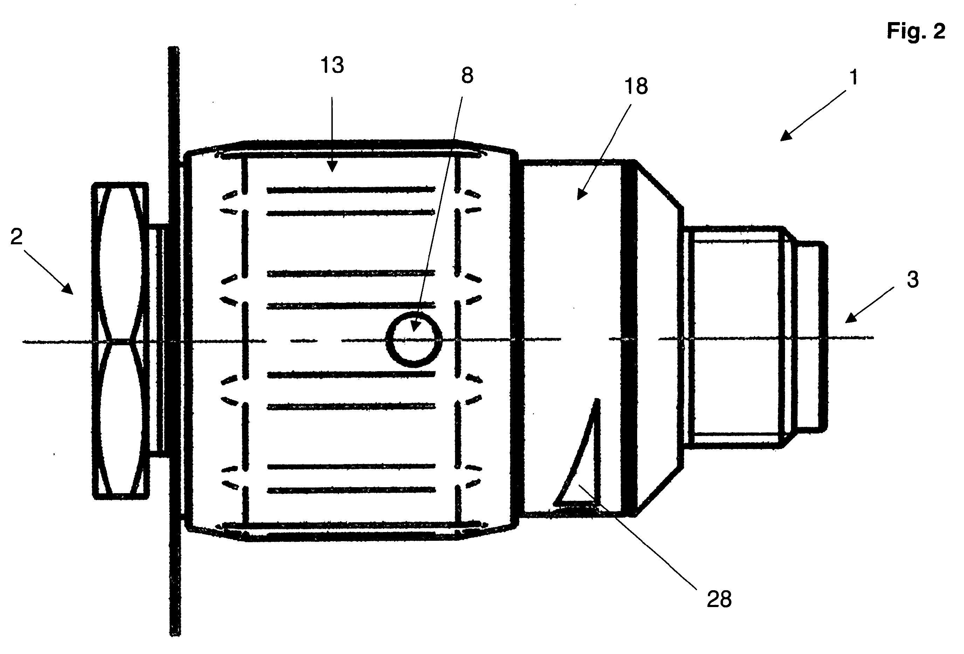

Gemäß einer bevorzugten Ausführungsform der Erfindung ist das hülsenförmige Antriebselement 13, welches sich auf der zylindermantelförmigen Außenfläche des Gehäuses 4 z.B. über O-Ringe 10 und/oder Lager abstützt, in axialer Richtung gegenüber dem Gehäuse 3 verschiebbar. Hierbei ist auf der zylindermantelförmigen Außenfläche und/oder auf der abgangseitigen hülsenförmigen Abdeckkappe 18 ein optisches Symbol oder Zeichen 28 angeordnet, welches gemäß der Darstellung von Fig. 2 in einer ersten axialen Position - in der das Antriebselement 13 in Fig. 1 nach links verschoben ist - von außen her frei sichtbar ist, und welches in einer zweiten, in den Figuren nicht dargestellten axialen Position - in der das Antriebselement in Fig. 2 nach rechts verschoben ist - vom hülsenförmigen Antriebselement 13 verdeckt wird.

Gemäß einer weiteren Ausführungsform der Erfindung ist der Längsschlitz im Winkel oder spiralförmig zur Längsachse 15 angeordnet, derart, dass sich das hülsenförmige Antriebselement 13 bei einem umfänglichen Verdrehen desselben durch ein Zusammenwirken des Verbindungselements 8 mit den Rändern des Längsschlitzes in axialer Richtung bewegt.

Gemäß einer weiteren Ausführungsform der Erfindung, die sich bevorzugt zum Absperren von z.B. explosiven Gasen eignet, ist der Längsschlitz L-förmig ausgebildet, wobei das kurze Ende des L-förmigen Längschlitzes zum Abgang 3 weist, und das hülsenförmige Antriebselement 13 in Richtung zum Abgang 3 hin mit einer federelastischen Kraft beaufschlagt wird, derart, dass Antriebselement 13 zum Verdrehen desselben aus einer ersten Schließstellung - in welcher der Durchfluss durch die erste und zweite Dichtscheibe 5, 6 unterbrochen ist - in eine zweite Durchflussstellung - in der das Medium durch die in den Dichtscheiben 5, 6 gebildeten kommunizierenden Öffnungen hindurchströmen kann - zuerst entgegen der federelastischen Kraft verschoben werden muss.

Gemäß einer in sicherheitstechnischer Hinsicht vorteilhaften Ausführungsform der Erfindung kann im Gehäuse ein zusätzliches Ventil 11 zum Verschießen des Abgangs 3 aufgenommen sein, welches ein Absperrorgan 20 mit einem insbesondere gabelförmigen Betätigungszapfen 22 aufweist, das in bekannter Weise von außen her, insbesondere durch einen auf den Abgang 3 aufgesetzten Anschlussadapter oder einen Systemverbinder, geöffnet werden kann.

Wie in Fig. 1 im Detail gezeigt ist, wird das Absperrorgan 20 bevorzugt durch federelastische Mittel z.B. in Form einer Druckfeder 12 in Richtung zum Abgang 3 hin in eine geschlossene Stellung gedrängt, in der das Absperrorgan 20 den Abgang 3 gegen einen Austritt des Mediums verschließt.

In besonders vorteilhafter Weise ist das zusätzliche Ventil 11 hierbei im Mitnehmer 7 aufgenommen, wodurch sich bei einer hohen Redundanz eine äußerst kompakte Bauweise ergibt.

### Liste der Bezugszeichen

- 1: Laborarmatur
- 2: Eingang/Einlass
- 3: Abgang/Auslass
- 4: Gehäuse
- 5: erste Dichtscheibe mit erster Durchtrittsöffnung
- 6: zweite Dichtscheibe mit zweiter Durchtrittsöffnung
- 7: Mitnehmer
- 8: Verbindungselement / Stift
- 10: O-Ring
- 11: Ventil
- 12: federelastische Mittel
- 13: hülsenförmiges Antriebselement / Aussengriff
- 15: Längsachse
- 16: Öffnung / umfänglicher Längsschlitz
- 18: hülsenförmige Abdeckkappe
- 20: axial bewegliches Absperrorgan/Ventilkegel
- 22: gabelförmiger Betätigungszapfen
- 24: Durchgangsöffnung
- 26: Ausnehmung
- 28: Symbol

## Patentansprüche

1. Laborarmatur (1) mit einem einen Eingang (2) und einen Abgang (3) für ein Medium enthaltenden Gehäuse (4), sowie mit einem Absperrmechanismus, welcher eine erste gehäuseseitige Dichtscheibe (5) sowie eine, durch einen im Gehäuse drehbar aufgenommenen Mitnehmer (7) antreibbare zweite Dichtscheibe (6) umfasst,
**dadurch gekennzeichnet,**
**dass** der Eingang (2), die erste und zweite Dichtscheibe (5,6) sowie der Abgang (3) im Wesentlichen rotationssymmetrisch zu einer sich durch das Gehäuse (4) hindurch erstreckenden gemeinsamen Längsachse (15) angeordnet sind, und dass auf der Außenseite des Gehäuses ein gegenüber dem Gehäuse (4) in Umfangsrichtung drehbares, insbesondere hülsenförmiges Antriebselement (13) angeordnet ist, welches mit dem Mitnehmer (7) über ein Verbindungselement (8) antriebsmäßig verbunden ist, welches sich durch eine radial in der Außenseite des Gehäuses (4) gebildete Öffnung (16) in das Innere des Gehäuses (4) hinein erstreckt.

2. Laborarmatur nach Anspruch 1
**dadurch gekennzeichnet,**
**dass** die erste und/oder zweite Dichtscheibe (5, 6) aus Keramik gefertigt sind.

3. Laborarmatur nach Anspruch 1 und 2,
**dadurch gekennzeichnet,**
**dass** das Verbindungselement als zylindrischer Stift (8) ausgebildet ist, der sich aus der Außenseite des hülsenförmigen Antriebselements (13) heraus erstreckt.

4. Laborarmatur nach einem der vorhergehenden Ansprüche,
**dadurch gekennzeichnet,**
**dass** das Gehäuse (4) im Bereich des Antriebselements (13) eine im Wesentlichen zylindermantelförmige Außenfläche aufweist, in die die Öffnung (16) als umfänglicher Längsschlitz eingebracht ist.

5. Laborarmatur nach einem der vorhergehenden Ansprüche,
**dadurch gekennzeichnet,**
**dass** das hülsenförmige Antriebselement (13) in axialer Richtung gegenüber dem Gehäuse (3) verschiebbar ist.

6. Laborarmatur nach Anspruch 5,
**dadurch gekennzeichnet,**
**dass** auf der zylindermantelförmigen Außenfläche und/oder auf einer abgangseitigen hülsenförmigen Abdeckkappe (18) ein optisches Symbol oder Zeichen (28) angeordnet ist, welches in einer ersten axialen Position von außen her frei sichtbar ist, und welches in einer zweiten axialen Position vom hülsenförmigen Antriebselement (13) abgedeckt wird.

7. Laborarmatur nach Anspruch 4 und 5,
**dadurch gekennzeichnet,**
**dass** der Längsschlitz im Winkel zur Längsachse angeordnet ist, derart, dass sich das hülsenförmige Antriebselement (13) bei einem umfänglichen Verdrehen desselben durch ein Zusammenwirken des Verbindungselements (8) mit den Rändern des Längsschlitzes in axialer Richtung bewegt.

8. Laborarmatur nach Anspruch 4 und 5,
**dadurch gekennzeichnet,**
**dass** der Längsschlitz L-förmig ausgebildet ist, und dass das hülsenförmige Antriebselement (13) in Richtung zum Abgang (3) hin mit einer federelastischen Kraft beaufschlagt wird, derart, dass zum Verdrehen des Antriebselements (13) aus einer ersten Schließstellung, in welcher der Durchfluss durch die erste und zweite Dichtscheibe gesperrt ist, in eine zweite Durchflussstellung, in der das Medium durch in den Dichtscheiben (5, 6) gebildete Öffnungen hindurchströmen kann, das Antriebselement (13) zuerst entgegen der federelastischen Kraft verschoben werden muss.

9. Laborarmatur nach einem der vorhergehenden Ansprüche,
**dadurch gekennzeichnet,**
**dass** im Gehäuse (4) ein zusätzliches Ventil (11) zum Verschießen des Abgangs (3) aufgenommen ist, welches von außen her, insbesondere durch einen auf den Abgang (3) aufgesetzten Anschlussadapter oder einen Systemverbinder, geöffnet werden kann.

10. Laborarmatur nach Anspruch 9,
**dadurch gekennzeichnet,**
**dass** das zusätzliche Ventil (11) im Mitnehmer (7) aufgenommen ist.

11. Laborarmatur (1) nach Anspruch 5 oder 6,
**dadurch gekennzeichnet,**
**dass** das zusätzliche Ventil (11) ein Absperrorgan (20) aufweist, welches durch federelastische Mittel (12) in Richtung zum Abgang (3) hin in eine geschlossene Stellung gedrängt wird, in der das Absperrorgan (20) den Abgang (3) gegen einen Austritt des Mediums verschließt.
